# EUROPEAN PATENT SPECIFICATION

(11) **EP 1 941 312 B1**
(45) Date of publication and mention of the grant of the patent: **08.01.2014**
(21) Application number: 06795014.7
(22) Date of filing: 27.10.2006
(51) Int. Cl.: G02B 6/42, G02B 27/09

(54) **OPTICAL FIBRE COUPLING SYSTEM**
FASEROPTISCHES KOPPELSYSTEM
SYSTEME DE COUPLAGE EN FIBRE OPTIQUE

(30) Priority: 29.10.2005 GB 0522083
(43) Date of publication of application: 09.07.2008
(73) Proprietor: GSI Group Limited, Swift Valley Rugby Warwickshire CV21 1QN (GB)
(72) Inventor: LEWIS, Steffan, Berkshire RG6 1NL (GB)
(74) Representative: Kensett, John Hinton
(86) International application number: PCT/GB2006/050357
(87) International publication number: WO 2007/049077

(56) References cited:
- EP-A1- 1 241 510
- US-A- 4 688 884
- US-A- 4 807 954
- US-A- 5 734 766

## Description

This invention relates to an optical coupling system. In particular, but not exclusively, it relates to an optical fibre structure for coupling the output of a high-power semi-conductor having a linear emitting region into an optical fibre with high coupling efficiency and brightness.

High-power semi-conductor laser diodes are often used for pumping fibre lasers. In these applications, the output from the fibre laser is applied to a cladding layer of the fibre which has Bragg gratings formed in its core and the energy from the laser diodes is used as pumping energy to cause a lasing effect within the active fibre.

A means is therefore required for coupling the output of these high-power semi-conductor laser diodes into the cladding of the optical fibres.

High-power semi-conductor laser diodes suitable for such laser pumping often have linear emitting regions. Most commonly, these have dimensions of approximately 1 x 100 µm. The output of such an emitter can be coupled into a multi-mode optical fibre with a core diameter slightly larger than the emitter width, typically around 105 µm, using a simple fast axis collimation scheme. It is desirable to use emitters with larger output width, typically as large as 1,000 µm, as these can produce more power at a lower cost per watt. However, if the output of such lasers is coupled into a circular optical fibre using a straightforward fast axis collimation scheme, then the diameter of the optical fibre core must be very large (ie greater than 1000 µm) and therefore the brightness (or more correctly radiance) of the fibre coupled output may be too low to be useful as a fibre laser pump source.

Various techniques have been developed for circularising the output of linear semi-conductor laser sources and coupling this into an optical fibre with much smaller diameter than the emitter width. US 4,688,884 discloses a fibre optical coupling system for phased array semi-conductor lasers. This system is for coupling, the output from an array of semi-conductor lasers to an optical fibre and has a 'squashed' input end which has a generally elliptical, cross-section. The output end is generally circular for coupling to a circular fibre.

The fibre coupler shown in this document however is squashed to produce its input end. Such squashing may cause difficulties during manufacture such as damage the coupler or may lead to unreliable or unquantifiable transmission rates or to non-repeatability amongst different couplers. The coupling efficiency with this coupler may be around 77 to 80% but is generally less than optimal for a given configuration.

The present invention arose in an attempt to provide an improved optical coupler and to increase coupling efficiency.

According to the present invention there is provided an optical fibre coupling structure comprising an optical fibre having an elongate input surface and shaped so that the diameter of the core of the fibre reduces in one dimension away from the input while increasing in the other dimension away from the input to form respective convergent and divergent surfaces, towards an output which is more circular than the input;
wherein the optical fibre tapers outward in a direction towards the input and has a wedge formed onto the tapered section.

The optical fibre most preferably has a core which is non-circular in cross-section so as to couple optical rays input at the input end between horizontal and vertical planes.

The invention further provides a method of forming an optical fibre coupling structure comprising tapering an optical fibre to a required output diameter and forming a wedge onto the tapered section by removal of material so as to form an elongate input at the end of the wedge portion.

In a further aspect, there is provided a method of coupling a laser beam into an output optical fibre, using a coupling structure.

Embodiments of the invention will now be described, by way of example only, with reference to the accompanying drawings, in which:
Figure 1 shows an optical coupler coupling between a single emitter laser and an output fibre;
Figure 2 shows a first manufacturing step;
Figure 3 shows a second manufacturing step;
Figure 4 shows a vertical cross-section;
Figure 5 shows a horizontal cross-section;
Figure 6 is explanatory diagram;
Figure 7 is a further explanatory diagram; and
Figure 8 is a plot of coupling efficiency against taper length for cores of different configuration.

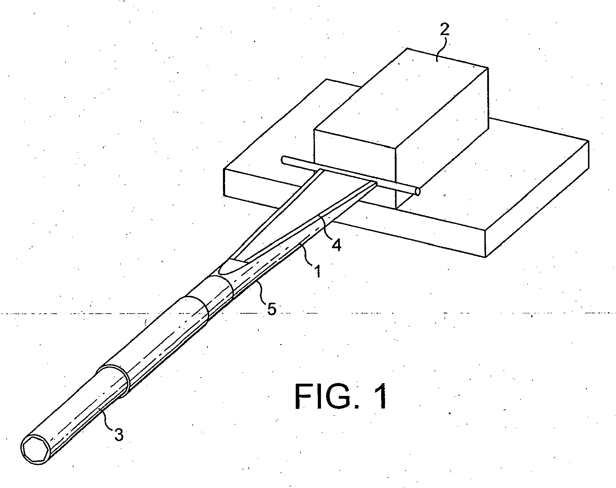

Referring now to Figure 1, a coupling structure 1 is shown coupling between a broad stripe single laser emitter (eg laser diode emitter) 2 and an output optical fibre 3.

The laser emitter 2 is a broad stripe single emitter and typically is arranged to have an output aperture of about 750 x 1 µm. The laser diode may be used to provide pumping energy through a fibre 3 to a cladding pumped optical fibre laser 3. The coupling structure 1 is mounted between the laser diode 2 and output fibre 3. The structure 1 comprises a large diameter optical fibre that is tapered and has a low angle wedge 4 machined or polish onto the tapered section 5. As is shown in Figures 1 to 5, the fibre is tapered so that its diameter in one direction (the horizontal direction) is greatest at its input and reduces generally continuously along the tapered section 5. Similarly, the wedge section is formed so that the diameter in the other direction is at a minimum at the end 6 and diverges outwards away from the input along section 5. The input surface is therefore generally rectangular but may have other shapes provided it has one major dimension (the horizontal dimension in this case) which is substantially greater than the other major dimensions.

The optical fibre includes a central core 7 and at least one cladding layer 8. Optical radiation is transmitted within the fibre by virtue of total internal reflection at the core-cladding interface. ,

Radiation is emitted from the laser diode or other emitter 2 via a fast access collimator 9 into the input face 6 of the coupler. In the coupler, the generally rectangular or otherwise elongate output of the linear emitter is circularised and coupled into an output optical fibre 3 with core diameter smaller than the emitter width.

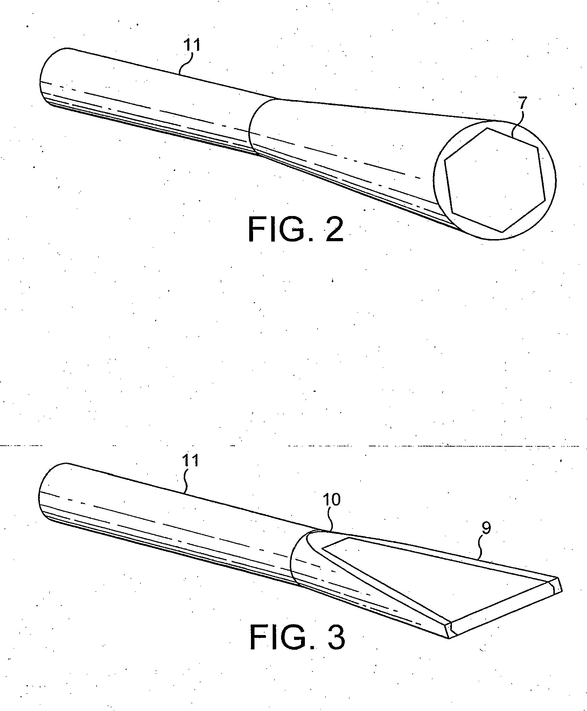

As is shown in Figure 2, the coupler most preferably has a non-circular core. Advantageously, it is faceted and may be hexagonal as shown by the core 7 shown in Figure 2 or may be another polygonal shape having flat sides or have other non-circular configurations. The reason for this will be described further below.

Figures 2 and 3 show the basic steps in manufacturing the coupler. Firstly, a relatively large diameter optical fibre (typically having a diameter which is to represent the largest diameter of input face 6 of the coupler after manufacture) is tapered by heating and drawing to the required output diameter. The fibre has a non-circular core. This step is shown in Figure 2 where the fibre reduces in diameter from its input end 6 towards its output end. In one example, the input diameter may be about 800 µm and the output diameter about 400 µm.

Secondly, as shown in Figure 3, a wedge 9 is formed on the tapered section. This is formed by an operation which removes material, such as a machining or planing operation. It is preferably performed by optical polishing but may be performed by other methods. The wedge may be formed on one or both sides of the fibre.

The coupler may terminate at the largest diameter part 10 of the wedge portion or may continue, as shown in Figures 2 and 3, with a generally cylindrical optical fibre section 11 which can then be connected to an output fibre 3.

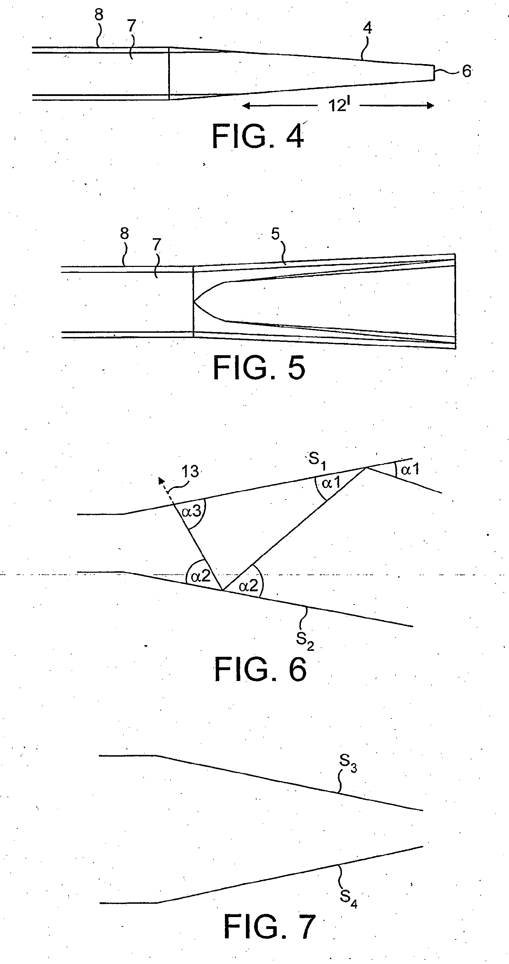

As shown in Figure 3, and also more clearly in Figure 4, the wedge is preferably formed so that it exposes the core 7 directly to the air at at least the narrower end of the wedge shown by portion 12 in Figure 4.

As is well-known, optical transmission in an optical fibre occurs by total internal reflection of light at the core/cladding interface provided at the incident angle of the radiation is less than the critical angle of that interface. In the portion of the coupler in which the core is exposed, the interface is a core-air interface and internal reflection also occurs at this interface provided the critical angle relevant to this interface is not exceeded.

Basically, the structure of the coupler is one in which the diameter of the fibre reduces in one dimension away from the input while increasing in the other dimension away from the input. Thus, the tapering causes a reduction in the horizontal dimension (in the disposition shown in the figures) whilst the wedging causes an increase in the vertical dimension, both in the direction away from the input.

As is shown in Figure 6, an optical ray which is incident upon a first wall S1 of a convergent structure at an angle □₁ which is less than the critical angle is reflected off this surface at similar angle □₁. It then impinges upon opposite wall S2 but at an increased angle □₂. This angle might again be less than the critical angle so that ray is reflected back to surface S1. At surface S1 this time, because S1 and S2 are convergent, the angle of incidence will again be greater and this might be greater than the critical angle. Therefore, the ray is not internally reflected and may pass out of the fibre, as shown at 13.

To overcome this, if the coupler is divergent in the other dimension, as shown in Figure 7, then provided the optical rays are caused to couple between, say, the horizontal and vertical planes, then rays alternately reflecting from the top and side surfaces will alternately encounter converging and diverging surfaces. Thus, the effect, outlined with respect to Figure 6, will be cancelled out if after each time a ray contacts one of the (convergent) surfaces S1 or S2 it then contacts one of the (divergent) surfaces S3 and S4. This ensures that any ray input at the correct angle to the input face 6 of the coupler will continue to transmit through the fibre to the output 10 and hence onwards through the rest of the fibre.

Instead of the term "critical angle" the term "numeral aperture" is often used in relation to optical fibres so that if an incident angle exceeds the numeral aperture of the optical fibre it ceases to be guided by it and is transmitted outwards through the side of the fibre, as shown at 13.

The optical fibre is caused to have a core which is non-circular to provide better coupling between the convergent and divergent surfaces of Figures 6 and 7, for example. If the core were circular, any light ray which enters in a horizontal disposition for example would simply be reflected horizontally each time and therefore would ultimately probably cease to be transmitted, as described above. If this ray on the other hand encounters a surface which is not perpendicular to its direction of travel then the ray will be reflected at a non-horizontal angle and thus will ultimately impinge upon both generally divergent and generally convergent surfaces, thus ensuring that the ray continues to be transmitted.

A hexagonal core geometry, as shown in Figure 2, has been found to be particularly efficient in this regard but any other core geometry which is non-circular may also be used. The geometry is preferably a faceted one comprising a polygonal shape with three of more straight sides. It may be, for example, pentagonal, hexagonal or any other polygonal shape. Alternatively, one or more of the surfaces of the core may be arcuate or any other non-circular configuration may be used for different configurations.

Effectively, the hexagonal or other non-circular orientation increases the coupling of rays between the horizontal and vertical plane and thus increases performance. This can enable the length of the taper to be reduced, making the structure easier to manufacture.

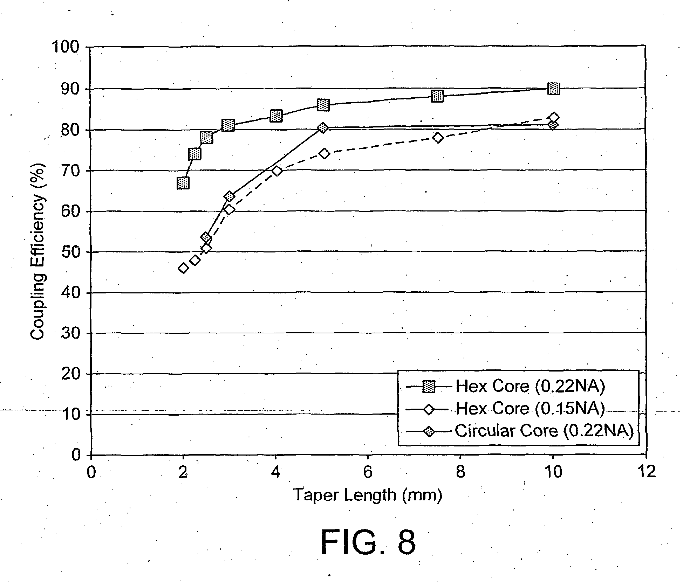

Figure 8 shows a plot of taper length in millimetres (ie length of the wedge portion) against coupling efficiency calculated for three different samples. These are respectively for a hexagonal core of numerical aperture 0.22, a hexagonal core of numerical aperture 0.15 and for a circular core of numerical aperture 0.22. The emitter dimensions are 750 x 1 µm. The input core width is 800 µm wide and the output optical fibre core diameter is 400 µm.

The results show that in general a longer taper length results in higher coupling efficiency. However, a longer tapered section can be more difficult to manufacture and it is therefore desirable to minimise the length of the tapered section. In the example shown, the highest coupling efficiency is seen to be around 90% and this is achieved for a 10 mm taper with a hexagonal core numerical aperture of 0.22. The results show that to obtain the highest coupling efficiency, a hexagonal or other faceted or non-circular core is preferable to a circular section core. A circular core geometry gives lower coupling efficiency as there is insufficient coupling between rays in the horizontal and vertical planes.

Some of these surfaces may have anti-reflection coatings and this would result in even higher coupling efficiency.

## Claims

1. An optical fibre coupling structure (1) comprising an optical fibre (3) having an elongate input surface (6) and shaped so that the diameter of the core (7) of the fibre reduces in one dimension away from the input while increasing in the other dimension away from the input to form respective convergent and divergent surfaces, towards an output (10) which is more circular than the input;
**characterised in that** the optical fibre tapers outward in a direction towards the input and has a wedge formed (9, 4) onto the tapered section (5).

2. A structure as claimed in Claim 1, wherein the optical fibre has a core which is faceted.

3. A structure as claimed in Claim 2, wherein the core is of hexagonal section.

4. A structure as claimed in any preceding claim, wherein the optical fibre has a core which is of non-circular section and is shaped so as to couple an optical ray input at the input end between converging and diverging surfaces of the coupler.

5. An optical fibre coupling structure as claimed in Claim 4, wherein the core is shaped so as to induce vertical displacement so that any optical ray entering the input is caused to impinge upon the top or bottom surface of the core before that ray reaches the end of a tapered section forming part of the coupling structure.

6. A method of forming an optical fibre coupling structure comprising tapering an optical fibre to a required output diameter and forming a wedge onto the tapered section by removal of material so as to form an elongate input at the end of the wedge portion.

7. A method as claimed in Claim 6, wherein the optical fibre is tapered by heating and drawing.

8. A method as claimed in Claim 6 or 7, wherein the wedge is formed by machining, preferably optical polishing, onto the tapered section.

9. A method as claimed in Claims 6, 7 or 8, wherein the optical fibre has a non-circular core.

10. A method as claimed in Claim 9, wherein the core has a faceted cross-section.

11. A method as claimed in any of Claims 6 to 10, wherein the wedge is formed to include a portion in which the core of the optical fibre is exposed.

12. A method of coupling a laser beam into an output optical fibre, comprising using a coupling structure as claimed in any preceding claim.

13. A method as claimed in Claim 12, wherein the laser beam is a single beam.

14. A method as claimed in Claim 12 or 13, wherein the laser beam is the output of a laser diode.

15. A method as claimed in Claim 12, 13 or 14, wherein the laser beam is a pumping beam.

## Patentansprüche

1. Faseroptische Kopplungsstruktur (1), die eine Lichtleitfaser (3) umfasst, die eine längliche Eingangsoberfläche (6) aufweist und so geformt ist, dass sich der Durchmesser des Kerns (7) der Faser in einer Dimension vom Eingang weg reduziert, während er in der anderen Dimension vom Eingang weg zunimmt, um jeweilige konvergierende und divergierende Oberflächen in Richtung eines Ausgangs (10) zu formen, der mehr kreisförmig als der Eingang ist;
**dadurch gekennzeichnet, dass** sich die Lichtleitfaser nach außen in einer Richtung zum Eingang hin verjüngt und einen Keil (9, 4) aufweist, der auf den verjüngten Bereich (5) geformt ist.

2. Struktur, wie in Anspruch 1 beansprucht, wobei die Lichtleitfaser einen facettierten Kern aufweist.

3. Struktur wie in Anspruch 2 beansprucht, wobei der Kern einen sechseckigen Bereich besitzt.

4. Struktur, wie in einem vorangehenden Anspruch beansprucht, wobei die Lichtleitfaser einen Kern aufweist, der einen nicht kreisförmigen Bereich besitzt und geformt ist, einen optischen Strahleneingang am Eingangsende zwischen konvergierenden und divergierenden Oberflächen des Kopplers zu koppeln.

5. Faseroptische Kopplungsstruktur, wie in Anspruch 4 beansprucht, wobei der Kern geformt ist, vertikale Verschiebung zu bewirken, sodass irgendein in den Eingang eintretender optischer Strahl veranlasst wird, auf die obere oder untere Oberfläche des Kerns zu fallen, bevor der Strahl das Ende eines verjüngten Bereichs erreicht, der Teil der Kopplungsstruktur formt.

6. Verfahren zum Formen einer faseroptischen Kopplungsstruktur, die Verjüngen einer Lichtleitfaser auf einen erforderlichen Ausgangsdurchmesser und Formen eines Keils auf den verjüngten Abschnitt durch Entfernen von Material umfasst, um einen länglichen Eingang am Ende des Keilabschnitts zu formen.

7. Verfahren, wie in Anspruch 6 beansprucht, wobei die Lichtleitfaser durch Erwärmen und Ziehen verjüngt wird.

8. Verfahren wie in Anspruch 6 oder 7 beansprucht, wobei der Keil durch maschinelle Bearbeitung, vorzugsweise optisches Polieren, auf den verjüngten Bereich geformt wird.

9. Verfahren, wie in Ansprüchen 6, 7 oder 8 beansprucht, wobei die Lichtleitfaser einen nicht kreisförmigen Kern aufweist.

10. Verfahren, wie in Anspruch 9 beansprucht, wobei der Kern einen facettierten Querschnitt aufweist.

11. Verfahren, wie in einem der Ansprüche 6 bis 10 beansprucht, wobei der Keil geformt ist, einen Abschnitt einzuschließen, in dem die Lichtleitfaser freigelegt ist.

12. Verfahren zum Koppeln eines Laserstrahls in eine Ausgangs-Lichtleitfaser, welches die Verwendung einer Kopplungsstruktur, wie in einem vorangehenden Anspruch beansprucht, umfasst.

13. Verfahren, wie in Anspruch 12 beansprucht, wobei der Laserstrahl ein Einzelstrahl ist.

14. Verfahren, wie in Anspruch 12 oder 13 beansprucht, wobei der Laserstrahl der Ausgang einer Laserdiode ist.

15. Verfahren, wie in Anspruch 12, 13 oder 14 beansprucht, wobei der Pumpstrahl ein Einzelstrahl ist.

## Revendications

1. Structure de couplage en fibre optique (1) comportant une fibre optique (3) à surface (6) d'entrée allongée, dont la forme est telle que le diamètre du coeur (7) de la fibre diminue dans une dimension en s'éloignant de l'entrée tout en augmentant dans l'autre dimension en s'éloignant de l'entrée, ceci pour former des surfaces convergente et divergente respectives vers une sortie (10) qui est plus circulaire que l'entrée;
**caractérisée en ce que** la fibre optique s'amincit vers l'extérieur en direction de l'entrée et comporte un coin formé (9, 4) sur la section amincie (5).

2. Structure selon la revendication 1, **caractérisée en ce que** la fibre optique comprend un coeur à facettes.

3. Structure selon la revendication 2, **caractérisée en ce que** le coeur est de section hexagonale.

4. Structure selon l'une quelconque des revendications précédentes, **caractérisée en ce que** la fibre optique comprend un coeur qui est de section non circulaire et dont la forme sert à coupler un rayon optique d'arrivée à l'extrémité d'entrée et entre les surfaces convergente et divergente du coupleur.

5. Structure de couplage en fibre optique selon la revendication 4, **caractérisée en ce que** la forme du coeur sert à induire un déplacement vertical de sorte que tout rayon optique arrivant à l'entrée se trouve heurter la surface du haut ou du bas du coeur avant que ce rayon n'atteigne l'extrémité d'une section amincie faisant partie de la structure de couplage.

6. Procédé de réalisation d'une structure de couplage en fibre optique qui consiste entre autres à amincir une fibre optique jusqu'à un diamètre de sortie requis et à former un coin sur la section amincie en enlevant du matériau de manière à produire une entrée allongée à l'extrémité de la partie en forme de coin.

7. Procédé selon la revendication 6, **caractérisé en ce que** la fibre optique est amincie par chauffage et étirage.

8. Procédé selon la revendication 6 ou 7, **caractérisé en ce que** le coin est formé par usinage, de préférence par polissage optique, sur la section amincie.

9. Procédé selon les revendications 6, 7 ou 8, **caractérisé en ce que** la fibre optique comprend un coeur qui est de section non circulaire.

10. Procédé selon la revendication 9, **caractérisé en ce que** la coupe transversale du coeur est à facettes.

11. Procédé selon l'une quelconque des revendications 6 à 10, **caractérisé en ce que** le coin est formé de manière à inclure une partie dans laquelle le coeur de la fibre optique est mis à découvert.

12. Procédé de couplage d'un faisceau laser dans une fibre optique de sortie, qui consiste entre autres à employer une structure de couplage selon l'une quelconque des revendications précédentes.

13. Procédé selon la revendication 12, **caractérisé en ce que** le faisceau laser est un faisceau unique.

14. Procédé selon la revendication 12 ou 13, **caractérisé en ce que** le faisceau laser est constitué par la sortie d'une diode laser.

15. Procédé selon la revendication 12, 13 ou 14, **caractérisé en ce que** le faisceau laser est un faisceau de pompage.
